# EUROPEAN PATENT APPLICATION

(11) **EP 0 799 748 A1**
(43) Date of publication of application: **08.10.1997**
(21) Application number: 97302146.2
(22) Date of filing: 27.03.1997
(51) Int. Cl.: B60R 13/04, B60J 10/08

(54) **An elongate strip**

(30) Priority: 03.04.1996 GB 9607032
(71) Applicant: Standard Products Limited, Huntingdon Cambridgeshire PE18 6NU (GB)
(72) Inventor: Keys, James Frederick, Saint Neots, Cambridgeshire, PE19 3AB (GB)
(74) Representative: Nash, David Allan

(57) **Abstract**

The invention provides an elongate strip to be secured in a recess defined between a first control surface and a second, variable, surface which forms an angle with the plane of the first surface, said strip comprising a first elongate component which along at least a substantial part of its length comprises, in cross-section, a first portion having means for securing a wall of the first portion to the control surface and a second portion having a means for securing a wall of the second portion to the variable surface, wherein a hinge means is provided between the first portion and the second portion about which the second portion is capable of flexing to enable the position of the said second portion to adapt to height variations along the length of the variable surface.

The elongate strip may be secured in the roof ditch of an automotive vehicle.

## Description

This invention relates to an elongate strip and is more particularly concerned with an elongate strip which may be secured in the roof ditch of an automotive vehicle to obscure the unsightly appearance of the sheet metal formation within the roof ditch.

Many automotive vehicles are now built from panels which are assembled together in the manufacturing process. As part of this operation, a roof panel is joined to a body side panel and at the junction a so-called roof ditch is formed. This roof ditch, at which point the roof and body side are welded together has an unsightly appearance and a trim strip is normally secured along the roof ditch to improve the appearance of the vehicle.

A problem with the present trim strips is that they are unable to disguise effectively the varying height in the horizontal surface at the base of the roof ditch which is formed in the vehicle assembly process. The present invention is intended to solve this problem.

The invention takes advantage of the fact that, as part of the vehicle design process, the vertical wall of the roof ditch formed by the roof panel is a control surface and is subject to small tolerances. In accordance with the invention, the elongate strip to be secured in the roof ditch is secured to this vertical wall, rather than to the base or other walls of the roof ditch.

Thus, according to one aspect of the present invention, there is provided a elongate strip to be secured in a recess defined between a first control surface and a second, variable, surface which forms an angle with the plane of the first surface, said strip comprising a first elongate component which along at least a substantial part of its length comprises, in cross-section, a first portion having means for securing a wall of the first portion to the control surface and a second portion having a means for securing a wall of the second portion to the variable surface, wherein a hinge means is provided between the first portion and the second portion about which the second portion is capable of flexing to enable the position of the said second portion to adapt to height variations along the length of the variable surface.

The elongate strip of the invention may further comprise a second elongate component which is joined to the said first elongate component and extends along the line of the recess. To this end, the first elongate component may include a means for receiving and securing to it a cooperating part of the second elongate component. For example, the first elongate component may comprise a channel means and the second component may comprise a projecting limb which is capable of being received and retained in the channel of the first component.

In the elongate strip according to the invention, the second portion of the first component is preferably secured to the variable surface along the whole length of the recess. The said second portion of the first component amy be secured to the variable surface across a first part of its width along part of the length of the recess and across a second part of its width along another part of the length of the recess.

The cross-section of the second portion of the first component may vary along its length depending on the structure of the roof ditch formed in a vehicle. Along part of its length, the first portion of the first elongate component may be absent.

In the elongate moulding of the invention, the wall of the first portion may be adhesively secured to the said control surface. Preferably, the wall of the second portion is adhesively secured to the said control surface. A pressure sensitive adhesive tape may be provided to secure the first and/or second portions to their respective surface(s).

The first portion of the first elongate component amy be formed from a relatively rigid rubber or plastics material and the second portion may be formed from a relatively soft rubber or plastics material.

The hinge between the first portion and the second portion may be formed as a narrowing of the material between the two portions.

The parts of the elongate strip may be formed in a manner known per se, preferably by an extrusion process. Such an extrusion process will allow different parts of the first component to be formed from different durometer rubber or plastic.

In accordance with another aspect of the present invention, there is provided automotive vehicle of the type in which a roof ditch is formed at the junction of the roof panel and the body side panel, said roof ditch defining a recess comprising a first, generally vertical, control surface and a second, variable, surface which forms an angle with the plane of the control surface, wherein an elongate strip in accordance with the first aspect of this invention is secured in the recess.

In the automotive vehicle of the present invention, the elongate strip secured in the roof ditch may be divided into three sections as follows:
(a) a first section extending between the vehicle windscreen and vehicle front door, the said first portion of the first elongate component being absent and the said second portion including, at its end away from the windscreen, a lip for sealing against the adjacent door frame;
(b) a second section extending adjacent the top of the front vehicle door comprising both first and second portions of the first elongate component, the second portion including, at its end away from the first portion, a lip for sealing against the adjacent door frame;
(c) a third section extending from the "B" pillar of the vehicle towards the rear of the vehicle in which the second portion remains hinged to the first portion, but is of reduced width compared to the width of the second portion in the said second section.

In this aspect of the invention, a second elongate component may be mounted partially on the said first elongate component and partially on a moulding provided about the vehicle windscreen, to extend along the line of the recess to present a decorative surface obscuring the roof ditch.

In order to minimise the effects of the height variability of the variable surface, the height datum is provided near the vertical control surface.

The visible parts of the second elongate component and the visible parts of the second portion of the first elongate component may be coloured to match the vehicle body colour.

In accordance with a third aspect of the invention, there is provided an automotive vehicle of the type in which a roof ditch is formed at the junction of the roof panel and the body side panel, said roof ditch defining a recess comprising a first, generally vertical, control surface and a second surface which forms an angle with the plane of the control surface, wherein an elongate element is secured in the recess about the said vertical control surface.

In this aspect of the invention, the elongate element may comprise two elongate components secured together: a first component which is secured to the control surface along a substantial portion of the length of the recess and a second decorative component mechanically mounted on the first component. The first component may additionally include a secondary door seal along that part of its length which is adjacent the vehicle front door.

In accordance with a fourth aspect of the invention, there is provided an automotive vehicle of the type in which a roof ditch is formed at the junction of the roof panel and the body side panel, wherein a combined trim and sealing strip is secured to the roof ditch, said combined strip comprising a first part which includes means for securing the strip in and along the roof ditch and a sealing means for providing a seal with the vehicle door frame and a second part which is mounted on the first part and which extends along the length of the roof ditch to present a continuous decorative surface. The second part may be mechanically mounted on the first part and the first part may be adhesively secured in the roof ditch, for example by pressure sensitive adhesive tape.

In this aspect of the invention, the visible regions of the second part may be coloured to match the colour of the vehicle body.

For a better understanding of the present invention, and to show how the same may be carried into effect, reference will now be made, by way of example only, to the accompanying drawings in which:
Figure 1 is a side view of an automotive vehicle of the type in which a roof ditch is formed at the junction of the roof panel and the body side panel;
Figure 2 is a side view of a prior art elongate strip for securing in the roof ditch of the automotive vehicle shown in Figure 1;
Figures 3, 4 and 5 show cross sections through the lines A-A, B-B and C-C respectively of the elongate strip shown in Figure 2;
Figure 6 is an elongate strip in accordance with the invention; and
Figure 7, 8 and 9 show, respectively, cross sections at A-A, B-B and C-C through the elongate strip shown in Figure 6.

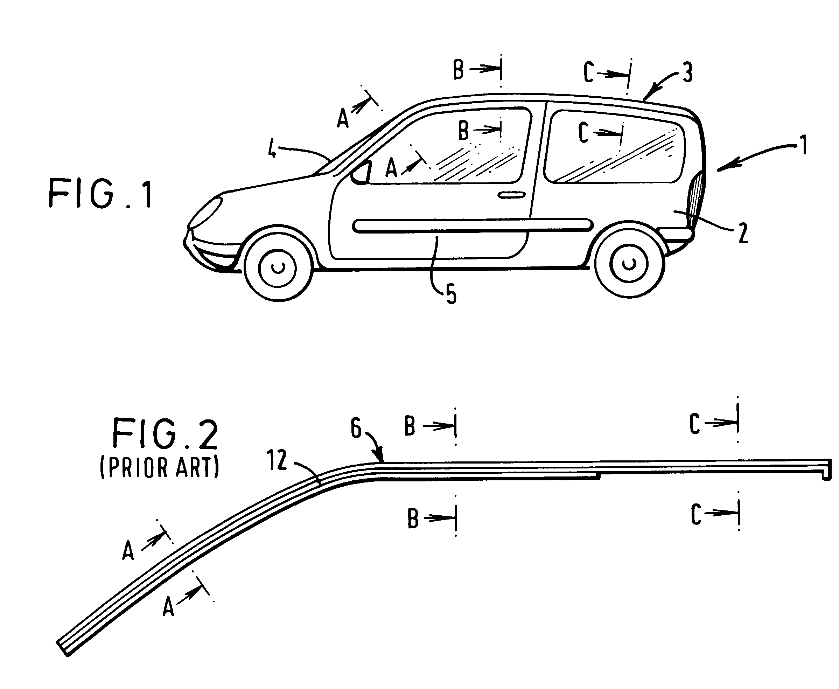

In Figure 1, automotive vehicle 1 comprises body side panels 2 (one shown) and a roof 3 which form a junction at a roof ditch. Vehicle 1 includes a windscreen 4 and a front door 5 which opens and closes in a door aperture in side panel 2.

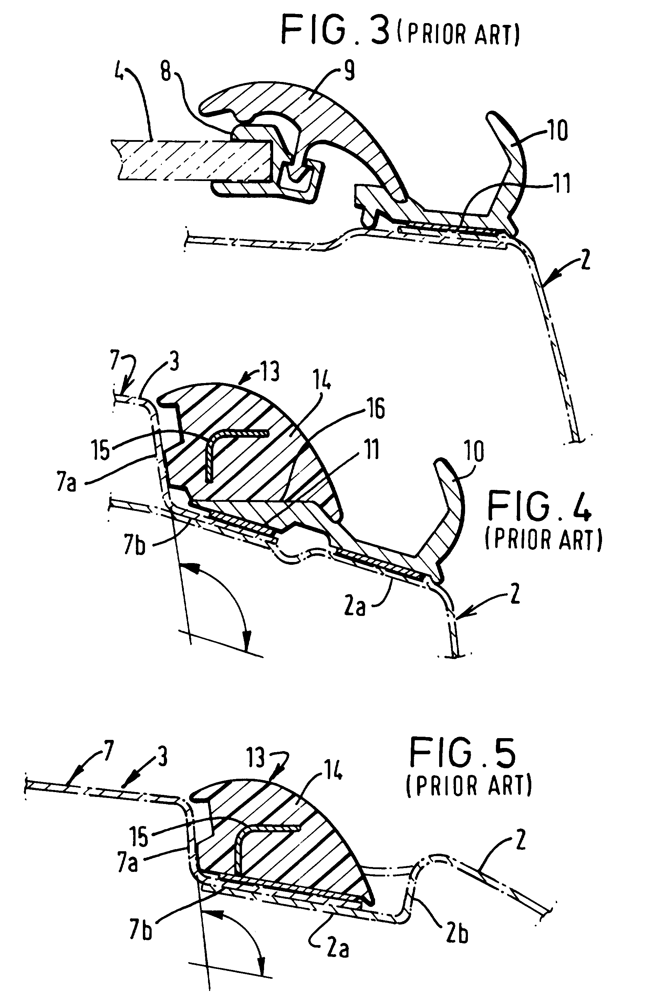

In prior art arrangements, the roof ditch at the junction of the roof 3 and side panel 2 of an automotive vehicle 1 is provided with an elongate strip 6 one function of which is to disguise the generally unsightly roof ditch at which point the roof panel 3 and the side panel 2 are joined together, normally in a welding operation. In the prior art arrangement, the elongate strip 6 may be divided into three sections, the cross-sections of each of which are shown in Figures 3, 4 and 5.

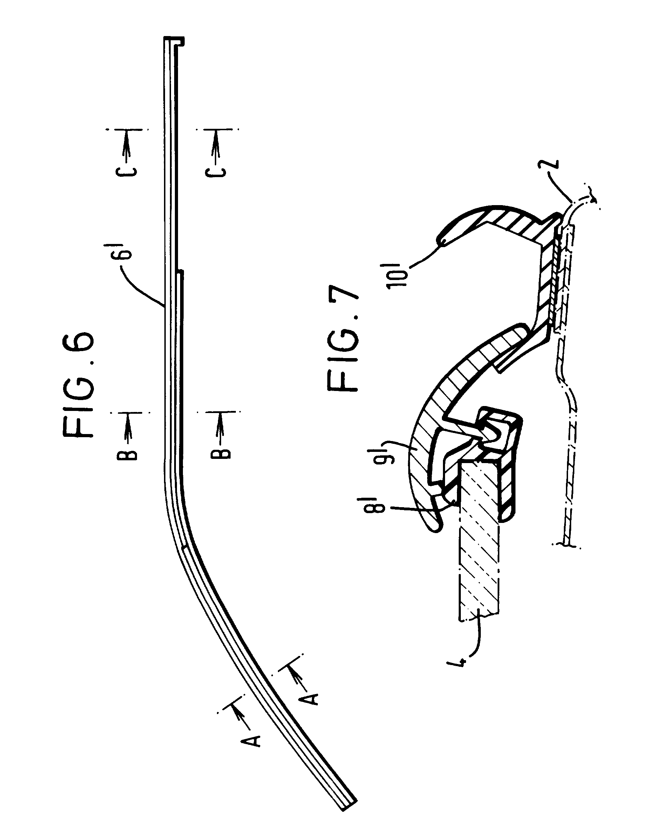

The cross-section of the roof ditch is best shown in Figures 4 and 5. A roof panel 7 has a downwardly turned portion 7a which then folds back to form portion 7b. Portion 7b is welded to the top edge 2a of the side body panel to form a base section of the roof ditch. The base section is essentially a variable surface in that its height may vary slightly along its length leading to a wavy appearance. At section B-B the top edge 2a of the side panel is folded down to form the side of the vehicle body, in particular the door opening frame. At section B-B, there is an upstanding portion 2b which folds back to form the rear side of the vehicle. It is to be noted that the angle of the base of the ditch with the portion 7a is different between sections B-B and C-C

At section A-A shown in Figure 3, windscreen 4 includes a windscreen mounting extrusion 8 to which is attached a trim cap 9. Provided on the body side panel 2 is a secondary door seal part 10 which is adhesively secured, for example by pressure sensitive adhesive tape 11 to the side panel 2. Trim cap 9 extends across both the windscreen mounting extrusion 8 and part of the secondary door seal 10.

In the prior art arrangement, the trim cap 9 only extends along that part of the elongate strip which is adjacent to the windscreen 4 and terminates at position 12 as shown in Figure 2. From position 12 to the rear end of the elongate strip, the strip is composed of a decorative roof ditch trim 13 comprising an elastomeric body 14 having a rigid core 15. At section B-B, the decorative roof ditch trim is secured, for example by an adhesive attachment 16, to the secondary door seal 10 which itself is adhesively secured to the variable surface 7b/2a by the adhesive means 11, such as pressure sensitive adhesive tape.

At section C-C, which is towards the rear of the vehicle 1 shown in Figure 1, the decorative roof trim strip 13 remains, but the secondary door seal is no longer present.

This prior art arrangement suffers from the disadvantage that the rigid secondary door seal is unable to properly disguise variations in the height of the variable surface 7b/2a, which may lead to an unsightly appearance.

In accordance with the invention, as shown in Figures 6-9, an elongate strip is provided which extends along the whole length of the roof ditch from the base of the windscreen 4 to the rear of the vehicle 1.

Section A-A is similar to section A-A in the prior art (Figure 3). However, at section B-B and section C-C the elongate strip 6' is different and is composed of two separate parts which are mounted together, namely a first component 20 which is secured in the roof ditch and a second component or trim cap part 21 which is mounted on the first component 20. In this arrangement, the first component 20 which is mounted in the roof ditch comprises a first portion 22 which is adhesively secured to the vertical surface 7a of the roof panel, which is a "control" surface and is therefore subject to very small tolerances. The first component also includes a second portion 23 which is adhesively secured to the variable surface. The first and second portions 22 and 23 are joined together by a hinge portion 24 which permits the second portion 23 to adapt to the varying height in the variable surface, and therefore disguise irregularities in this surface. The second portion 23 is normally made from a softer rubber than the rubber of the first portion, which is normally made from a resilient, hard rubber or plastic material.

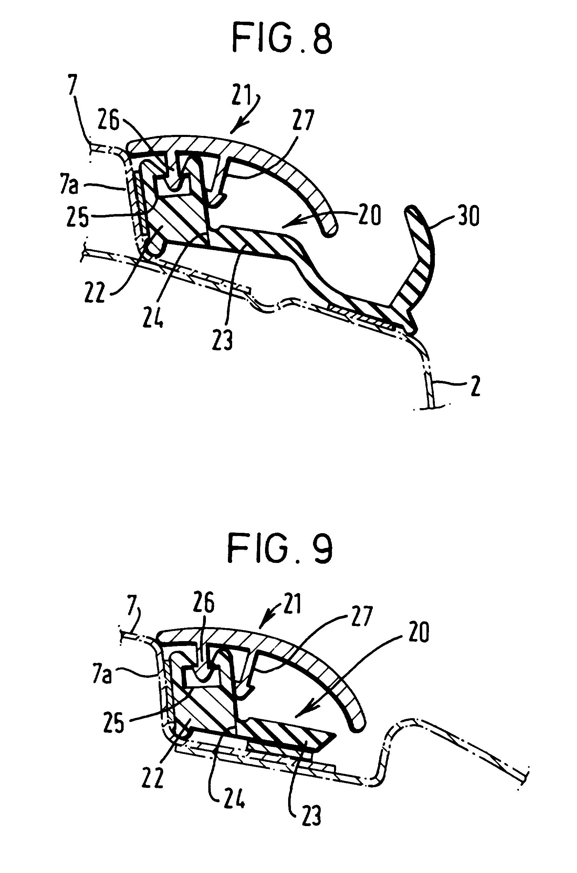

In Figures 8 and 9 it will be seen that the first portion 22 of the first component includes a channel 25 which receives a projecting limb 26 from the trim cap part 21. A channel 25 has barbs which capture the enlarged end of the projecting limb 26. The trim cap 21 may also include a second projecting limb 27 which rests against an outer wall of the first portion 22 of the first component 20.

In Figure 8, the second portion 23 of the first component 20 includes a secondary door seal part 30, which rests against and seals the door frame of the vehicle door. In Figure 9, however, this section of the second portion 23 is removed, owing to the different form of the roof ditch, and the second portion 23 is secured over its relatively short width to the variable surface 7a/2b, the trim cap 21 extending across the whole width of the first component 20.

In the arrangement of the invention , a single trim cap is provided which extends the whole length of the vehicle form the base of the windscreen to the back end of the roof ditch. Moreover, at least part of the second portion 23 of the first component also extends the whole length of the vehicle.

## Claims

1. An elongate strip to be secured in a recess defined between a first control surface and a second, variable, surface which forms an angle with the plane of the first surface, said strip comprising a first elongate component which along at least a substantial part of its length comprises, in cross-section, a first portion having means for securing a wall of the first portion to the control surface and a second portion having a means for securing a wall of the second portion to the variable surface, wherein a hinge means is provided between the first portion and the second portion about which the second portion is capable of flexing to enable the position of the said second portion to adapt to height variations along the length of the variable surface.

2. An elongate strip according to claim 1, further comprising a second elongate component which is joined to the said first elongate component and extends along the line of the recess.

3. An elongate strip according to claim 2, wherein the first elongate component includes a means for receiving and securing to it a cooperating part of the second elongate component.

4. An elongate strip according to claim 3, wherein the first elongate component comprises a channel means and the second component comprises a projecting limb which is capable of being received and retained in the channel of the first component.

5. An elongate strip according to any preceding claim, wherein the second portion of the first component is secured to the variable surface along the whole length of the recess.

6. An elongate strip according to any preceding claim, wherein the said second portion of the first component is secured to the variable surface across a first part of its width along part of the length of the recess and across a second part of its width along another part of the length of the recess.

7. An elongate strip according to any preceding claim, wherein the cross-section of the second portion of the first component varies along its length.

8. An elongate strip according to any preceding claim, wherein along part of its length the first portion of the first elongate component is absent.

9. An elongate strip according to any preceding claim, wherein the wall of the first portion is adhesively secured to the said control surface.

10. An elongate strip according to any preceding claim, wherein the wall of the second portion is adhesively secured to the said control surface.

11. An elongate strip according to claim 8 or 9, wherein a pressure sensitive adhesive tape is provided to secure the first and/or second portions to their respective surface(s).

12. An elongate strip according to any preceding claim, wherein the first portion of the first elongate component is formed from a relatively rigid rubber or plastics material and the second portion is formed from a relatively soft rubber or plastics material.

13. An automotive vehicle of the type in which a roof ditch is formed at the junction of the roof panel and the body side panel, said roof ditch defining a recess comprising a first, generally vertical, control surface and a second, variable, surface which forms an angle with the plane of the control surface, wherein an elongate strip as claimed in any one or more of the preceding claims is secured in the recess.

14. An automotive vehicle according to claim 13, wherein the elongate strip secured in the roof ditch is divided into three sections as follows:
(a) a first section extending between the vehicle windscreen and vehicle front door, the said first portion of the first elongate component being absent and the said second portion including, at its end away from the windscreen, a lip for sealing against the adjacent door frame;
(b) a second section extending adjacent the top of the front vehicle door comprising both first and second portions of the first elongate component, the second portion including, at its end away from the first portion, a lip for sealing against the adjacent door frame;
(c) a third section extending from the "B" pillar of the vehicle towards the rear of the vehicle in which the second portion remains hinged to the first portion, but is of reduced width compared to the width of the second portion in the said second section.

15. An automotive vehicle according to claim 13 or 14, wherein a second elongate component is mounted partially on the said first elongate component and partially on a moulding provided about the windscreen, to extend along the line of the recess to present a decorative surface obscuring the roof ditch.

16. An automotive vehicle according to claim 15, wherein the visible parts of the second elongate component and the visible parts of the second portion of the first elongate component are coloured to match the vehicle body colour.

17. An automotive vehicle of the type in which a roof ditch is formed at the junction of the roof panel and the body side panel, said roof ditch defining a recess comprising a first, generally vertical, control surface and a second surface which forms an angle with the plane of the control surface, wherein an elongate element is secured in the recess about the said vertical control surface.

18. An automotive vehicle according to claim 17, wherein the elongate element comprises two elongate components secured together: a first component which is secured to the control surface along a substantial portion of the length of the recess and a second decorative component mechanically mounted on the first component.

19. An automotive vehicle according to claim 17 or 18, wherein the first component additionally includes a secondary door seal along that part of its length which is adjacent the vehicle front door.

20. An automotive vehicle of the type in which a roof ditch is formed at the junction of the roof panel and the body side panel, wherein a combined trim and sealing strip is secured to the roof ditch, said combined strip comprising a first part which includes means for securing the strip in and along the roof ditch and a sealing means for providing a seal with the vehicle door frame and a second part which is mounted on the first part and which extends along the length of the roof ditch to present a continuous decorative surface.

21. An automotive vehicle according to claim 20, wherein the visible regions of the second part are coloured to match the colour of the vehicle body.

22. An automotive vehicle according to claim 20 or 21, wherein the second part is mechanically mounted on the first part.

23. An automotive vehicle according to claim 20, 21 or 22, wherein the first part is adhesively secured in the roof ditch.

24. An elongate strip substantially as hereinbefore described, with reference to Figures 7 to 9 of the accompanying drawings.

25. A automotive vehicle substantially as hereinbefore described, with reference to Figures 7 to 9 of the accompanying drawings.
